# EUROPEAN PATENT SPECIFICATION

(11) **EP 3 387 272 B1**
(45) Date of publication and mention of the grant of the patent: **15.01.2020**
(21) Application number: 16713066.5
(22) Date of filing: 08.02.2016
(51) Int. Cl.: F16B 25/10, F16B 25/00

(54) **IMPROVED WOOD SCREW**
VERBESSERTE HOLZSCHRAUBE
VIS À BOIS AMÉLIORÉE

(30) Priority: 08.12.2015 BE 201505802
(43) Date of publication of application: 17.10.2018
(73) Proprietor: PGB-Asia Limited, Hong Kong (CN); Pennoit, Luc Fernand Emile, 9050 Gentbrugge (BE)
(72) Inventor: PENNOIT, Luc Fernand Emile, 9050 Gentbrugge (BE)
(74) Representative: Chielens, Kristof
(86) International application number: PCT/IB2016/050652
(87) International publication number: WO 2017/098337

(56) References cited:
- CN-A- 102 235 410
- DE-A1- 2 732 695
- US-A- 4 027 573
- US-A1- 2005 069 396

## Description

The present invention relates to a wood screw provided to be screwed into an object, wherein the screw comprises a screw head, a cylindrical shank around which a primary thread helically extends and a conical end part ending in a tip.

Screws have been used for a long time as removable connecting means. Conventional screws consist of a solid cylinder, usually made of metal, around which a thread is wound helically, either clockwise or anticlockwise. At one end, the screws are provided with a widened section, the head, in which a recess is arranged. A screwdriver fits into this recess.

In order to be able to insert screws directly into an object, their other end is pointed. However, in practice it has been found that it is very difficult to insert such conventional screws having a pointed end into harder objects (for example objects made of hardwood). A number of different solutions have already been described in order to facilitate the insertion of screws into harder objects. For instance, it is known from British patent publication GB 2 359 603 to provide the bottom helical threads with teeth. These teeth will ensure that the screw can more easily be inserted into the material by virtue of the fact that the teeth will remove material from the object faster than the conventional screws.

Another solution is described in European patent publication EP 1 881 209 in which, in addition to helical threads having teeth, the screw is also provided with a groove extending longitudinally in the shank, which groove is provided with cutting edges. The groove will provide for a space via which, inter alia, the material loosened by the teeth can more easily be removed during the screwing process. The screw described in EP 1 881 209 is further provided with ribs which extend longitudinally and helically over the entire length of the shank. According to the patent holder, these ribs will ensure that the shank can more easily be inserted into the object and that the material loosened by the screw will more easily be able to be removed from the drilled hole.

The screw described in European patent EP 2 326 848 has a primary thread and an auxiliary thread which both start at the tip of the screw. The thread flanks of the primary thread on the shank are higher than the thread flanks of the auxiliary thread.

The fastener of DE 27 32 695 has a constant cross section stem and a tapering end portion terminating in a sharp point. The stem is provided with a pair of screw threads of like configuration. The tapering portion is provided with a third thread which begins at the pointed forward end in a very steep lead angle which functions as a drilling portion and thereafter the lead angle decreases so that the third thread may function to extrude the metal surrounding a guide opening formed by the drilling portion.

The object of the present invention is to provide an alternative screw which can also easily be inserted (screwed) into an object and wherein the material loosened by the screw will easily be removed from the drilled hole.

The object of the invention is achieved with a wood screw according to claim 1. A wood screw is provided to be screwed into an object, wherein the screw comprises a screw head, a cylindrical shank around which a primary thread helically extends and a conical end part ending in a tip, wherein the primary thread comprises an initial part extending in the direction of the tip of the screw, which initial part starts in the conical end part, and wherein the screw further comprises a first and a second auxiliary thread, wherein the first and second auxiliary threads extend over at least a first and a second partial length, respectively, of the conical end part, and wherein the initial part of the primary thread extends at least partially into the zone delimited by the end of the first auxiliary thread and the start of the second auxiliary thread.

In particular, the first and second threads will exclusively extend in the conical part. These first and second threads will ensure that the screw can more easily be pushed into the object. During a first phase, only the initial part of the primary thread will carve material away from the object, which will increase the size of the drilled hole and make it easier to screw the screw into the object. This also greatly reduces the risk of the object splitting.

Since the initial part extends at least partially into the zone delimited by the end of the first auxiliary thread and the start of the second auxiliary thread, a channel (space) is formed in each case between the end of the first auxiliary thread and the initial part, on the one hand, and between the initial part and the start of the second auxiliary thread, on the other hand, via which channel the material which is scraped away from the object by the initial part of the screw during the screwing process can be removed.

Preferably, the second auxiliary thread has a thread flank which is larger than the thread flank of the first auxiliary thread. In the conical end part, the thread flanks of the different threads do become smaller in the direction of the tip.

In a preferred embodiment of the screw according to the present invention, the external diameter of the second auxiliary thread is the same as the external diameter of the primary thread situated on the shank of the screw. In particular, the thread flank of the initial part becomes gradually larger from the start point, wherein the external diameter of the thread flank of the initial part in the conical end part is between 0% and 80% of the external diameter of the primary thread situated on the shank of the screw.

According to a particular embodiment of the screw according to the invention, the first and second auxiliary threads and the primary thread have different start points. The start point of the primary thread - which is the start point of the initial part - is situated in the conical end part of the screw, as are the start points of the first and second auxiliary threads. Preferably, the start point of the first auxiliary thread is located close to the tip of the screw.

In a more particular embodiment of the screw according to the invention, the first auxiliary thread extends over a maximum of one thread formation. Preferably, the second auxiliary thread extends over a minimum of 2/3 and a maximum of 4/3 of a thread formation.

In an advantageous embodiment of the screw according to the invention, the conical end part has a length which corresponds to three times the pitch of the primary thread. Preferably, the pitch of the primary thread is between 40% and 100% of the external diameter of the screw. In particular, the primary thread and the first and second auxiliary threads have the same pitch.

According to the invention, the inclination of the first and second auxiliary threads and the primary thread, with the exclusion of the initial part, is the same. The inclination of the initial part differs from the inclination of the rest of the primary thread. Owing to this difference in inclination and the feature that the initial part extends in the direction of the tip of the screw, the initial part can be considered to be a cut-off of the primary thread.

In an advantageous embodiment of the screw according to the invention, the primary thread comprises a number of successive turns, wherein at least one turn is provided with an annular cutting rib which extends at right angles to the shank.

In the context of the present invention, the term turn should be understood to mean a complete rotation of the thread through 360°.

The cutting rib has a scraping (carving) effect in the material, for example wood, of the object in which the screw is to be provided, owing to the fact that the inclination of the cutting rib differs from the inclination of the primary thread. This will also reduce the friction on the shank during insertion of the screw. In order to increase the effect of the cutting rib, it is provided with a toothed structure in an advantageous embodiment.

In a more preferred embodiment of the screw according to the invention, the screw comprises a first cutting rib and a second cutting rib, wherein said cutting ribs are each provided in a different turn. In a particular embodiment of the screw, a third cutting rib is provided in a further turn. In particular, the height of the cutting rib(s) is between 5% and 30% of the height of the primary thread.

According to a more particular embodiment of the screw according to the invention, part of the thread is provided with a toothed structure. The toothed structure on the thread is preferably provided on the thread which is provided on the shank and preferably not on the initial part. In combination with the cutting rib(s), the teeth on the thread ensure that the screw will quickly penetrate the object, meaning that less force needs to be exerted to insert the screw.

In an advantageous embodiment of the screw according to the invention, the cylindrical shank further comprises milling ribs. Such ribs are preferably provided, after the primary thread, at a certain distance from the head of the screw. Milling ribs are used on longer screws with a partial thread in order to reduce the friction on this last part of the shank and thus to prevent premature breakage of the part without a thread.

In order to further explain the properties of the present invention and to indicate additional advantages and particulars thereof, there now follows a more detailed description of a screw according to the present invention. It will be clear that nothing in the following description can be interpreted as a limitation of the scope of protection of the present invention defined in the claims.

In this description, reference numerals are used to refer to the attached drawings, in which:
- *Figure 1* *shows a perspective view of a screw according to the invention;*
- *Figure 2* *shows two detail views (**Figures 2.1 and 2.2**) of the tip of the screw, with the tip illustrated in* *Figure 2.2* *being rotated* ±*90° clockwise with respect to the tip illustrated in* *Figure 2.1**;*

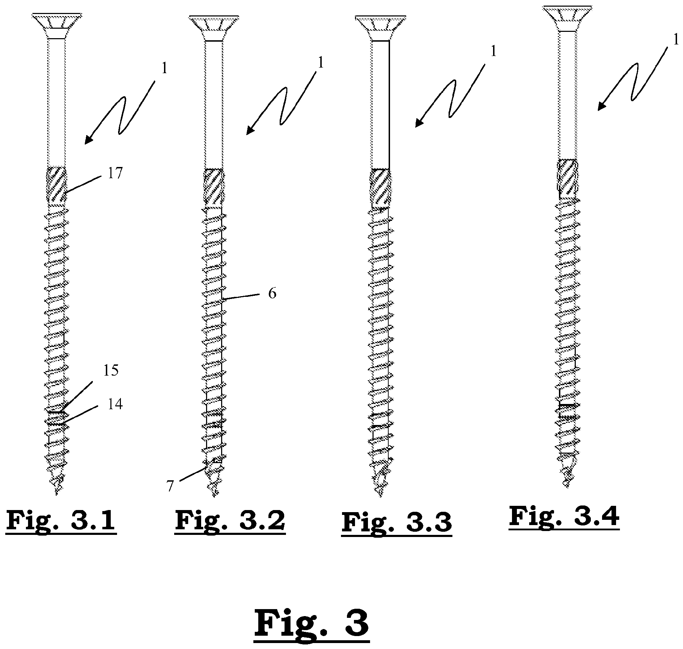

- *Figure 3* *shows a number of views of the screw illustrated in* *Figure 1**, with* *Figure 3**.**1* *representing a first front view and with* *Figures 3.2 to 3.4* *each showing a view in which the screw has been rotated 90° anticlockwise with respect to the preceding figure;*
- *Figure 4* *shows a view of a part of the screw according to the invention which demonstrates that the conical part has a length which is three times the pitch;*
- *Figure 5* *shows a view of a part of the screw according to the invention on which only the primary thread is illustrated with its initial part, with the view illustrated in* *Fig. 5**.**2* *being rotated 90° clockwise with respect to the view shown in* *Fig. 5**.**1**;*
- *Figure 6* *shows a view of a part of the screw according to the invention on which only the first auxiliary thread is illustrated, with the view illustrated in* *Fig. 6**.**2* *being rotated 90° clockwise with respect to the view shown in* *Fig. 6**.**1**;*
- *Figure 7* *shows a view of a part of the screw according to the invention on which only the second auxiliary thread is illustrated, with the view illustrated in* *Fig 7**.**2* *being rotated 90° clockwise with respect to the view shown in* *Fig. 7**.**1**;*
- *Figure 8* *illustrates that the length of the conical end part is determined by the pitch;*
- *Figure 9* *shows the influence of the pitch on the length of the conical end part, with* *Figure 9**.**1* *showing a screw with a large pitch,* *Figure 9**.**2* *showing a screw with a medium-sized pitch, and* *Figure 9**.**3* *showing a screw with a small pitch.*

The wood screw (1) according to the present invention and as illustrated in the attached figures has a cylindrical shank (3) provided with a primary thread (6) which extends substantially helically. The shank (3) is made of metal, preferably hardened steel, and is provided with a screw head (2) at one end. The screw head (2) may take various forms, for example a countersunk, hexagonal or oval head. The other end of the shank (3) is provided with a conical end part (4) with a pointed end (the tip (5) of the screw).

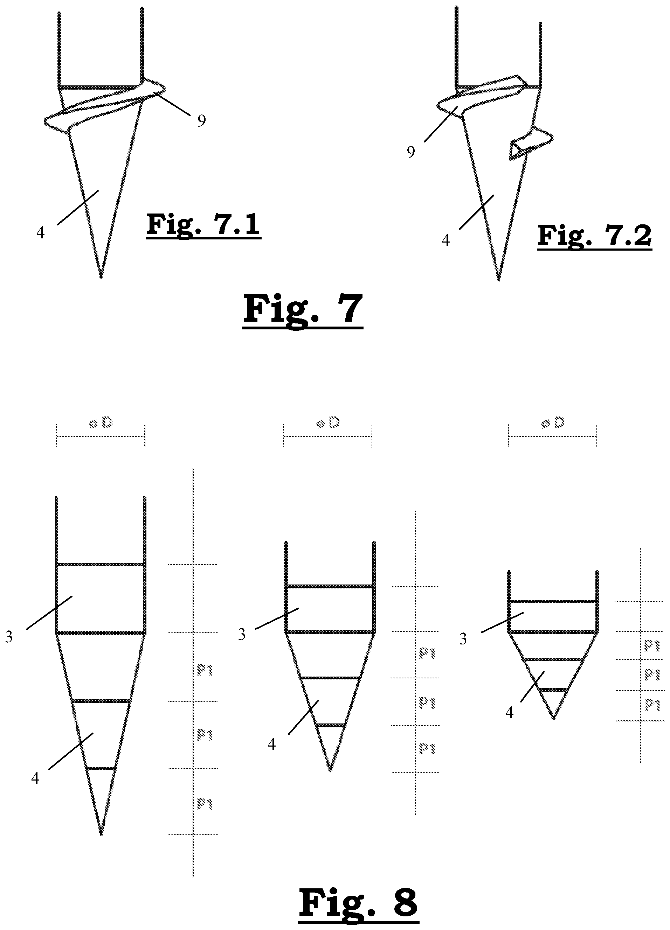

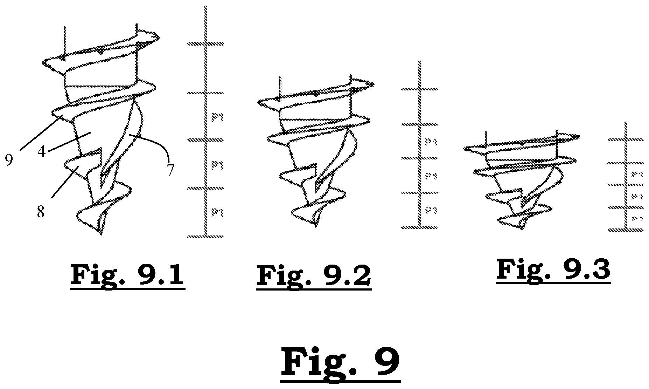

The pitch (PI) of the primary thread (6) on a screw according to the invention is between 40% and 100% of the external diameter (D) of the screw. The minimum pitch (PI min) is consequently the diameter (D) of the screw (1) × 0.4 and the maximum pitch (PI max) is the diameter (D) of the screw (1) × 1. The pitch also influences the length of the conical end part, as illustrated in Figure 9; the larger the pitch, the larger the conical end part. According to the present invention, the screw (1) has a conical end part (4), the length of which corresponds to three times the pitch (PI) of the primary thread (6). Figure 8 shows a number of embodiments of screws in which the length of the conical end part in each case corresponds to three times the pitch (PI).

The screw according to the present invention is provided in order to be screwed into an object. This object can be made of wood, hardwood, pressed boards, fibreboards, plastic panels, etc.

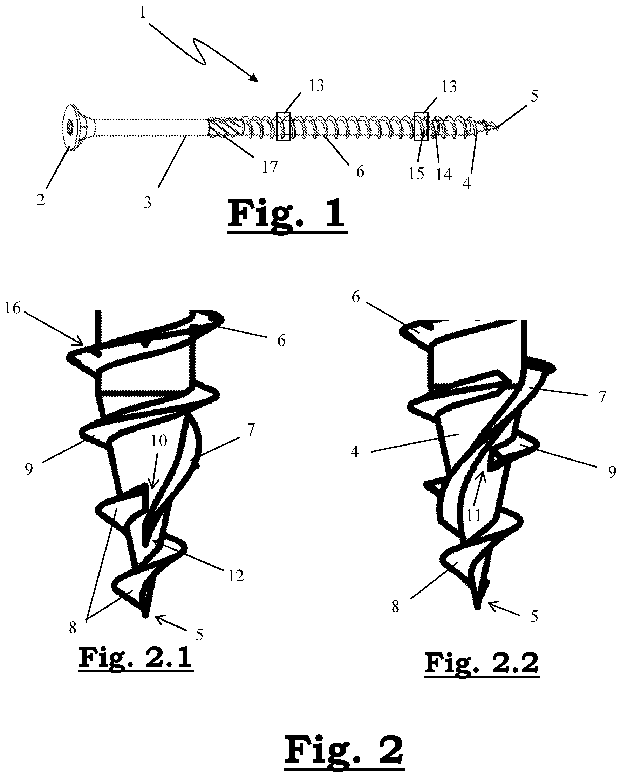

As stated above, the screw (1) is provided with a primary thread (6) which extends helically over part of the shank (3). The start of the primary thread (6) extends in the conical end part (4) of the screw (1). The start of the primary thread (6) is provided with an initial part (7) of the primary thread (6) which extends in the direction of the tip (5) of the screw (1). As can be seen from the attached figures (see in particular Figs 2.1 and 2.2), the inclination of the initial part (7) differs from the inclination of the rest of the primary screw (6). As a result, the initial part (7) will not follow the helical path of the primary thread, but acts as a cut-off which extends in the direction of the tip (5) of the screw (1). The initial part (7) of the primary thread has a maximum length which corresponds to the longitudinal (linear) distance (pitch) measured between two turns (13) of the primary thread; in particular, said initial part (7) starts in the conical end part (4) and ends when the primary thread (6) begins to extend helically around the shank (3).

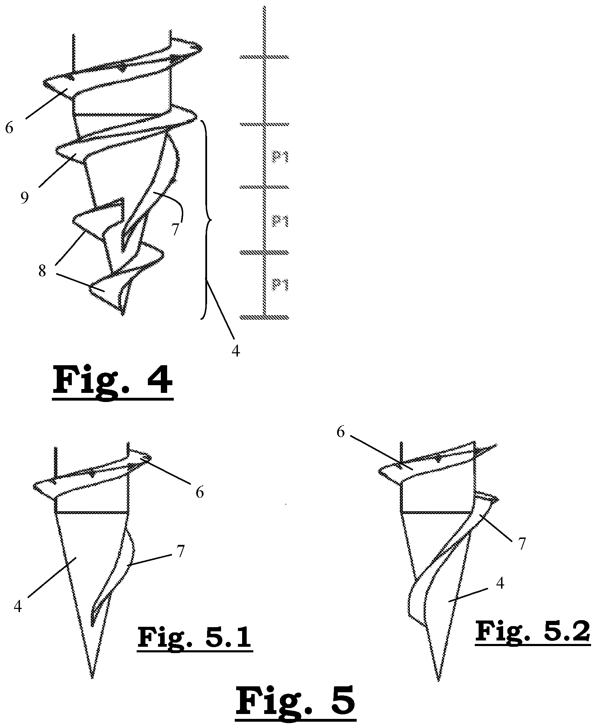

The screw (1) according to the present invention further comprises a first (8) and a second (9) auxiliary thread which are provided in the conical end part (4) of the screw (1). In this case, the initial part (7) of the primary thread (6) extends at least partially into the zone delimited by the end (10) of the first auxiliary thread (8) and the start (11) of the second auxiliary thread (9). Both the first (8) and the second (9) auxiliary thread have the same pitch as the primary thread (6), as illustrated in Figure 4.

The different threads (6, 8, 9) have different start points, in such a way that they do not interfere with the mutual operation. The first auxiliary thread (8) provides immediate hold in the object (for example wood), so that the screw (1) is immediately drawn into the wood. When the first auxiliary thread (8) is gaining a hold and performing its function, the initial part (7) of the primary thread (6) will begin carving out (hollowing out) the screw hole. It is only then that the first auxiliary thread (8) is assisted by the second auxiliary thread (9) in order to increase the penetrative force and thus improve the overall hold.

As a result of the fact that the thread flank of the initial part (7) of the primary thread (6) becomes gradually larger from its start point (12), the drilling capacity also increases. The drilled hole thus becomes larger than the shank (3) of the screw (1) but substantially smaller than the external diameter of the screw (1). This reduces the friction of the shank (3) on insertion without reducing the draw-out value. The external diameter of the thread flank of the initial part (7) in the conical end part (4) is preferably between 0% and 80% of the external diameter of the primary thread (6) situated on the shank (3) of the screw (1).

The three threads (6, 8, 9) are not connected to one another in any location; a considerable intermediate space is always provided so that the milled pulp can be removed and does not pile up against the threads. This is in contrast to the known screws where it is often the case that two threads having different inclinations intersect one another, which always leads to the accumulation of pulp at the site of the intersection, thus also reducing the effect of the dual threads. This is avoided by leaving openings (channels) between the various threads, which guarantees the real operation of the milling over the entire screw-in length.

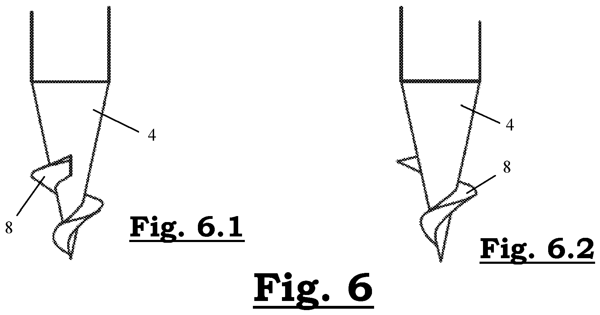

The fact that this screw (1) has three separate threads, specifically a primary thread (6), a first auxiliary thread (8) and a second auxiliary thread (9), can be clearly seen in Figures 5 to 7, in which the different threads (6, 8, 9) are each illustrated separately in two different views, with the second view being rotated 90° clockwise with respect to the first view shown.

Both the primary thread (6) (with the exclusion of the initial part (7)) and the first (8) and the second (9) auxiliary threads have the same inclination. The carving out of the shank diameter is performed solely by the initial part (7) (the cut-off) of the primary thread (6). The two auxiliary threads (8 and 9) merely have the function of fitting the screw (1) as quickly as possible and with as little force as possible. For this purpose, they must have the same direction and the same pitch. The draw-out force would actually be negatively influenced if the three threads were to have different inclinations.

The primary thread (6) comprises a number of successive turns (13), with at least one turn being provided with an annular cutting rib (14, 15) which extends at right angles to the shank. In the screws illustrated, a first cutting rib (14) and a second cutting rib (15) are provided, respectively, in two successive turns (13). The cutting ribs (14, 15) have a penetrative effect in the material, for example wood, of the object in which the screw is to be provided. In order to increase the effect of the cutting rib, it may be provided with a toothed structure. The primary thread (6) may also be provided with teeth (16).

The illustrated screw (1) is further provided with milling ribs (17). These milling ribs are provided after the primary thread (6). Milling ribs are used on longer screws with a partial thread in order to reduce the friction on this last part of the shank and thus to prevent premature breakage of the part without a thread.

## Claims

1. Wood screw (1) provided to be screwed into an object, wherein the screw (1) comprises a screw head (2), a cylindrical shank (3) around which a primary thread (6) helically extends and a conical end part (4) ending in a tip (5), wherein said wood screw (1) has three separate threads (6, 8, 9), specifically the primary thread (6), a first auxiliary thread (8) and a second auxiliary thread (9) which are not connected to one another in any location, wherein the primary thread (6) comprises an initial part (7) extending in the direction of the tip (5) of the screw (1), which initial part (7) starts in the conical end part (4), wherein the inclination of the first (8) and second (9) auxiliary threads and the primary thread (6), with the exclusion of the initial part (7), is the same, wherein the inclination of the initial part (7) differs from the inclination of the rest of the primary thread (6), wherein the first (8) and second (9) auxiliary threads extend over at least a first and a second partial length, respectively, of the conical end part (4), and wherein the initial part (7) of the primary thread (6) extends at least partially into the zone delimited by the end (10) of the first auxiliary thread (8) and the start (11) of the second auxiliary thread (9) such that a channel is formed in each case between the end of the first auxiliary thread (8) and the initial part (7), on the one hand, and between the initial part (7) and the start of the second auxiliary thread (9), on the other hand, via which channel the material which is scraped away from the object in which the screw (1) is screwed, by the initial part (7) of the screw (1) during the screwing process can be removed.

2. Wood screw (1) according to Claim 1, **characterized in that** the second auxiliary thread (9) has a thread flank which is larger than the thread flank of the first auxiliary thread (8).

3. Wood screw (1) according to Claim 1 or 2, **characterized in that** the external diameter of the second auxiliary thread (9) is the same as the external diameter of the primary thread (6) situated on the shank (3) of the screw (1).

4. Wood screw (1) according to one of the preceding claims, **characterized in that** the thread flank of the initial part (7) becomes gradually larger from the start point (12), wherein the external diameter of the thread flank of the initial part (7) in the conical end part (4) is between 0% and 80% of the external diameter of the primary thread (6) situated on the shank (3) of the screw (1).

5. Wood screw (1) according to one of the preceding claims, **characterized in that** the first (8) and second (9) auxiliary threads and the primary thread (6) have different start points.

6. Wood screw (1) according to one of the preceding claims, **characterized in that** the first auxiliary thread (8) extends over a maximum of one thread formation.

7. Wood screw (1) according to one of the preceding claims, **characterized in that** the second auxiliary thread (9) extends over a minimum of 2/3 and a maximum of 4/3 of a thread formation.

8. Wood screw (1) according to one of the preceding claims, **characterized in that** the pitch (PI) of the primary thread (6) is between 40% and 100% of the external diameter (D) of the screw (1).

9. Wood screw (1) according to one of the preceding claims, **characterized in that** the conical end part (4) has a length which corresponds to three times the pitch of the primary thread (6).

10. Wood screw (1) according to one of the preceding claims, **characterized in that** the primary thread (6) comprises a number of successive turns (13), wherein at least one turn (13) is provided with an annular cutting rib (14, 15) which extends at right angles to the shank (3).

11. Wood screw (1) according to Claim 10, **characterized in that** the screw (1) comprises a first cutting rib (14) and a second cutting rib (15), wherein said cutting ribs (14, 15) are each provided in a different turn (13).

12. Wood screw (1) according to Claim 10 or 11, **characterized in that** at least one cutting rib (14, 15) is provided with a toothed structure (16).

13. Wood screw (1) according to one of the preceding claims, **characterized in that** part of the primary thread (6) is provided with a toothed structure (16).

## Patentansprüche

1. Holzschraube (1), die dazu vorgesehen ist, in einen Gegenstand geschraubt zu werden, wobei die Schraube (1) einen Schraubenkopf (2), einen zylindrischen Schaft (3), um den sich ein Hauptgewinde (6) spiralförmig erstreckt, und einen in einer Spitze (5) endenden konischen Endteil (4) umfasst, wobei die Holzschraube (1) drei getrennte Gewinde (6, 8, 9), insbesondere das Hauptgewinde (6), ein erstes Nebengewinde (8) und ein zweites Nebengewinde (9), die an keiner Stelle miteinander verbunden sind, aufweist, wobei das Hauptgewinde (6) einen Anfangsteil (7) umfasst, der sich in die Richtung der Spitze (5) der Schraube (1) erstreckt, wobei der Anfangsteil (7) in dem konischen Endteil (4) beginnt, wobei die Neigung des ersten (8) und des zweiten (9) Nebengewindes und des Hauptgewindes (6) mit Ausnahme des Anfangsteils (7) gleich ist, wobei sich die Neigung des Anfangsteils (7) von der Neigung des Rests des Hauptgewindes (6) unterscheidet, wobei sich das erste (8) und das zweite (9) Nebengewinde über wenigstens eine erste beziehungsweise eine zweite Teillänge des konischen Endteils (4) erstrecken und wobei sich der Anfangsteil (7) des Hauptgewindes (6) wenigstens zum Teil in den Bereich erstreckt, der durch das Ende (10) des ersten Nebengewindes (8) und den Anfang (11) des zweiten Nebengewindes (9) auf eine solche Weise begrenzt ist, dass jeweils zwischen dem Ende des ersten Nebengewindes (8) und dem Anfangsteil (7) einerseits und zwischen dem Anfangsteil (7) und dem Anfang des zweiten Nebengewindes (9) andererseits ein Kanal ausgebildet ist, über den das Material, das von dem Gegenstand, in den die Schraube (1) eingeschraubt wird, von dem Anfangsteil (7) der Schraube (1) während des Schraubvorgangs abgeschabt wird, entfernt werden kann.

2. Holzschraube (1) nach Anspruch 1, **dadurch gekennzeichnet, dass** das zweite Nebengewinde (9) eine Gewindeflanke aufweist, die größer als die Gewindeflanke des ersten Nebengewindes (8) ist.

3. Holzschraube (1) nach Anspruch 1 oder 2, **dadurch gekennzeichnet, dass** der Außendurchmesser des zweiten Nebengewindes (9) identisch mit dem Außendurchmesser des an dem Schaft (3) der Schraube (1) gelegenen Hauptgewindes (6) ist.

4. Holzschraube (1) nach einem der vorhergehenden Ansprüche, **dadurch gekennzeichnet, dass** die Gewindeflanke des Anfangsteils (7) ab dem Anfangspunkt (12) allmählich größer wird, wobei der Außendurchmesser der Gewindeflanke des Anfangsteils (7) in dem konischen Endteil (4) zwischen 0% und 80% des Außendurchmessers des an dem Schaft (3) der Schraube (1) gelegenen Hauptgewindes (6) liegt.

5. Holzschraube (1) nach einem der vorhergehenden Ansprüche, **dadurch gekennzeichnet, dass** das erste (8) und das zweite (9) Nebengewinde und das Hauptgewinde (6) unterschiedliche Anfangspunkte aufweisen.

6. Holzschraube (1) nach einem der vorhergehenden Ansprüche, **dadurch gekennzeichnet, dass** sich das erste Nebengewinde (8) maximal über eine Gewindeausbildung erstreckt.

7. Holzschraube (1) nach einem der vorhergehenden Ansprüche, **dadurch gekennzeichnet, dass** sich das zweite Nebengewinde (9) minimal über 2/3 und maximal über 4/3 einer Gewindeausbildung erstreckt.

8. Holzschraube (1) nach einem der vorhergehenden Ansprüche, **dadurch gekennzeichnet, dass** die Steigung (P1) des Hauptgewindes (6) zwischen 40% und 100% des Außendurchmessers (D) der Schraube (1) liegt.

9. Holzschraube (1) nach einem der vorhergehenden Ansprüche, **dadurch gekennzeichnet, dass** der konische Endteil (4) eine Länge aufweist, die dem Dreifachen der Steigung des Hauptgewindes (6) entspricht.

10. Holzschraube (1) nach einem der vorhergehenden Ansprüche, **dadurch gekennzeichnet, dass** das Hauptgewinde (6) eine Anzahl von aufeinander folgenden Windungen (13) umfasst, wobei wenigstens eine Windung (13) mit einer ringförmigen Schneidrippe (14, 15) versehen ist, die sich rechtwinklig zu dem Schaft (3) erstreckt.

11. Holzschraube (1) nach Anspruch 10, **dadurch gekennzeichnet, dass** die Schraube (1) eine erste Schneidrippe (14) und eine zweite Schneidrippe (15) umfasst, wobei die Schneidrippen (14, 15) jeweils in einer anderen Windung (13) vorgesehen sind.

12. Holzschraube (1) nach Anspruch 10 oder 11, **dadurch gekennzeichnet, dass** wenigstens eine Schneidrippe (14, 15) mit einer gezahnten Struktur (16) versehen ist.

13. Holzschraube (1) nach einem der vorhergehenden Ansprüche, **dadurch gekennzeichnet, dass** ein Teil des Hauptgewindes (6) mit einer gezahnten Struktur (16) versehen ist.

## Revendications

1. Vis (1) à bois prévue pour être vissée dans un objet, la vis (1) comprenant une tête (2) de vis, une tige cylindrique (3) autour de laquelle s'étend un filet principal (6) de façon hélicoïdale et une partie extrémité conique (4) se terminant par une pointe (5), ladite vis (1) à bois présentant trois filets séparés (6, 8, 9), spécifiquement le filet principal (6), un premier filet auxiliaire (8) et un second filet auxiliaire (9) qui ne sont pas reliés entre eux dans aucune zone, le filet principal (6) comprenant une partie initiale (7) s'étendant dans la direction de la pointe (5) de la vis (1), laquelle partie initiale (7) commence dans la partie extrémité conique (4), l'inclinaison des premier (8) et second (9) filets auxiliaires et du filet principal (6), à l'exclusion de la partie initiale (7), est la même, l'inclinaison de la partie initiale (7) différant de celle du reste du filet principal (6), les premier (8) et second (9) filets auxiliaires s'étendant respectivement sur au moins une première et une seconde longueur partielle de la partie extrémité conique (4), et la partie initiale (7) du filet principal (6) s'étendant au moins partiellement dans la zone délimitée par l'extrémité (10) du premier filet auxiliaire (8) et le début (11) du second filet auxiliaire (9), de sorte qu'un canal est formé entre respectivement l'extrémité du premier filet auxiliaire (8) et la partie initiale (7), d'une part, et entre la partie initiale (7) et le début du second filetage auxiliaire (9), d'autre part, par lequel le matériau raclé de l'objet dans lequel la vis (1) est vissée peut être enlevé par la partie initiale (7) de la vis (1) pendant le processus de vissage.

2. Vis (1) à bois selon la revendication 1, **caractérisée en ce que** le second filet auxiliaire (9) présente un flanc de filet qui est plus grand que le flanc de filet du premier filet auxiliaire (8).

3. Vis (1) à bois selon la revendication 1 ou 2, **caractérisée en ce que** le diamètre extérieur du second filet auxiliaire (9) est égal au diamètre extérieur du filet principal (6) situé sur la tige (3) de la vis (1).

4. Vis (1) à bois selon l'une des revendications précédentes, **caractérisée en ce que** le flanc de filet de la partie initiale (7) devient progressivement plus grand à partir du point de début (12), le diamètre extérieur du flanc de filet de la partie initiale (7) dans la partie extrémité conique (4) étant entre 0% et 80% du diamètre extérieur du filet principal (6) situé sur la tige (3) de la vis (1).

5. Vis (1) à bois selon l'une des revendications précédentes, **caractérisée en ce que** les premier (8) et second (9) filets auxiliaires et le filet principal (6) ont des points de début différents.

6. Vis (1) à bois selon l'une des revendications précédentes, **caractérisée en ce que** le premier filet auxiliaire (8) s'étend sur une formation de filet au maximum.

7. Vis (1) à bois selon l'une des revendications précédentes, **caractérisée en ce que** le second filet auxiliaire (9) s'étend sur un minimum de 2/3 et un maximum de 4/3 d'une formation de filet.

8. Vis (1) à bois selon l'une des revendications précédentes, **caractérisée en ce que** le pas (P1) du filet principal (6) est compris entre 40% et 100% du diamètre extérieur (D) de la vis (1).

9. Vis (1) à bois selon l'une des revendications précédentes, **caractérisée en ce que** la partie extrémité conique (4) a une longueur qui correspond à trois fois le pas du filet principal (6).

10. Vis (1) à bois selon l'une des revendications précédentes, **caractérisée en ce que** le filet principal (6) comporte un certain nombre de tours successifs (13), au moins un tour (13) étant muni d'une nervure de coupe annulaire (14, 15) qui s'étend perpendiculairement à la tige (3).

11. Vis (1) à bois selon la revendication 10, **caractérisée en ce que** la vis (1) comprend une première nervure de coupe (14) et une seconde nervure de coupe (15), lesdites nervures de coupe (14, 15) étant prévues chacune dans un tour différent (13).

12. Vis (1) à bois selon la revendication 10 ou 11, **caractérisée en ce qu'**au moins une nervure de coupe (14, 15) est munie d'une structure dentée (16).

13. Vis (1) à bois selon l'une des revendications précédentes, **caractérisée en ce qu'**une partie du filet principal (6) est munie d'une structure dentée (16).
